# EUROPEAN PATENT SPECIFICATION

(11) **EP 2 873 143 B1**
(45) Date of publication and mention of the grant of the patent: **16.05.2018**
(21) Application number: 13739814.5
(22) Date of filing: 11.07.2013
(51) Int. Cl.: H02K 33/16, A61C 17/34, A61C 7/22, F16F 1/18, H02K 33/00, A61C 17/22

(54) **LINEAR MOTOR AND ELECTRIC DEVICE WITH LINEAR MOTOR**
LINEARMOTOR UND ELEKTRISCHES GERÄT MIT LINEARMOTOR
MOTEUR LINÉAIRE ET DISPOSITIF ÉLECTRIQUE À MOTEUR LINÉAIRE

(30) Priority: 13.07.2012 EP 12176403
(43) Date of publication of application: 20.05.2015
(73) Proprietor: Braun GmbH, 61476 Kronberg/Taunus (DE)
(72) Inventor: SCHOBER, Uwe, 61479 Glashütten (DE); ZIEGLER, Frank, 61184 Karben (DE); SCHAEFER, Robert, 60438 Frankfurt (DE)
(74) Representative: Schneider, Stefan Michael
(86) International application number: PCT/IB2013/055708
(87) International publication number: WO 2014/009915

(56) References cited:
- EP-A1- 1 193 844
- DE-A1-102006 061 381
- GB-A- 2 436 905
- US-A1- 2006 066 154

## Description

### FIELD OF THE INVENTION

The present invention is concerned with a linear motor (i.e. a resonant spring-mass motor for providing a linear reciprocating or oscillating movement) and in particular with a spring for providing the restoring force in such a linear motor. The invention is further concerned with an electric device comprising such a linear motor.

### BACKGROUND OF THE INVENTION

Linear motors are known that comprise a casing, an armature mounted at the casing for linear oscillation, a stator comprising a coil for driving the armature into oscillatory motion, and an amplitude control spindle, where the armature is at one end biased with a coil spring against the casing, the amplitude control spindle is biased at one end by a coil spring against the casing, and where the other end of the armature is biased by a coil spring against the other end of the amplitude control spindle. The amplitude control spindle is in particular used to absorb or increase an amplitude of the armature. Document US 2004/130221 A1 generally discusses such a motor.

Document DE 10 2006 061381 A1 discloses a flat spring for mounting an oscillating shaft of an oscillatory system. The spring allows mounting the shaft at a centre fastening section and it has a frame-like outer fastening section. Two arms extend from the centre fastening section and are connected with the outer fastening frame, which arms spiral around the centre fastening section over angular range of less than 180 degrees. The spring has a generally oblate overall structure in its plane of extension. The spring and the oscillatory system are described for use with an electric toothbrush.

It is an object of the present disclosure to provide a spring for a linear motor, a linear motor and an electric device equipped with such a linear motor that are improved over the known linear motors and electric devices or at least provide an alternative design.

### SUMMARY OF THE INVENTION

In accordance with at least one aspect there is provided a flat leaf spring for a linear motor as defined by claim 1.

In accordance with at least one aspect there is provided a linear motor as defined by claim 5.

In accordance with at least one aspect there is further provided an electric device that has a linear motor as proposed, wherein the linear motor is arranged for driving a functional element of the electric device.

### BRIEF DESCRIPTION OF THE DRAWINGS

The proposed flat leaf spring, linear motor and electric device with such a linear motor will be further elucidated by a detailed description of example embodiments and by reference to figures. In the figures
- Fig. 1: is a depiction of an example embodiment of a leaf spring as it may be used in a linear motor as proposed;
- Fig. 2: is a longitudinal cut through an example embodiment of a linear motor in accordance with the present disclosure;
- Fig. 3: is a cross sectional cut through the linear motor shown in Fig. 3 along the plane indicated by line A-A;
- Fig. 4: is a graph indicating the maximum driving force F that may be provided by a linear motor versus the peak amplitude A of the linear oscillation, where the curve referenced as M relates to a motor in accordance with the present description;
- Fig. 5: is a depiction of an example embodiment of an electric device that may comprise a linear motor in accordance with the present disclosure.

### DETAILED DESCRIPTION OF THE INVENTION

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be deleted, combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims. All publications and patents cited herein are incorporated herein by reference.

Although the embodiments are described herein in the context of an electric oral hygiene device, such as an electric toothbrush, embodiments are not limited thereto. Embodiments disclosed herein may be implemented in a wide-variety of applications, such as in the application of an electric tongue cleaner, an electric massage device and many others.

In some embodiments, a linear motor in accordance with the present description has an armature mounted for driven linear oscillation essentially along a longitudinal direction and a secondary mass mounted for linear oscillation essentially along the longitudinal direction. The secondary mass is functionally coupled with the armature (e.g. via mounting to a joint base such as a housing or a support structure) such that the vibrations generated by the armature excite the secondary mass into counter-oscillations cancelling the vibrations of the armature.

As is known in the art, such a linear motor where a secondary mass is functionally coupled with a driven armature, the secondary mass can provide for an overall reduction of vibrations transmitted by the linear motor to its housing. Additionally or alternatively, the vibrations transmitted from the secondary mass to the housing may cancel the vibrations transferred from the armature to the housing at least to a certain fraction and ideally completely. This effect can in particular be seen if the armature and the secondary mass move with opposite amplitude (i.e. with a phase shift of about 180 degrees). In some embodiments, the armature is mounted by at least a first and a second armature mounting spring assembly that each extend in a plane perpendicular to the longitudinal direction along which the armature is driven into a linear motion and additionally or alternatively, the secondary mass is mounted with at least a first and a second secondary mass mounting spring assembly each extending in a plane perpendicular to the longitudinal direction. At least the first and second armature spring assemblies have the same shape and orientation and are superimposed when seen in the longitudinal direction (i.e. are in alignment in longitudinal direction). Each of the spring assemblies of the linear motor may comprise at least one flat leaf spring in accordance with the present disclosure or may have a stack of at least two such leaf springs.

In some embodiments, the mass of the armature and the mass of the secondary mass are chosen to be approximately identical, e.g. the two masses do not differ by more than 10%, optionally by not more than 5%, further optionally by not more than 2% and even further optionally, by not more than 1%. In some embodiments, the mass of the secondary mass and the mass of the armature are identical.

In some embodiments, a linear motor in accordance with the present description has an armature mounted for driven linear oscillation essentially along a longitudinal direction, a drive shaft being driven by the armature into a linear oscillation along a first longitudinal axis that is parallel to the longitudinal direction, wherein the armature is asymmetrically arranged with respect to the longitudinal axis and has two opposing end parts extending along the first longitudinal axis, a centre part comprising a permanent magnet arrangement, which centre part extends in longitudinal direction with an offset to the first longitudinal axis, and two connecting parts that each connect one of the end parts with the centre part.

Such a particular design of the linear motor sensibly uses the available construction volume of a linear motor. In particular in case that the armature is mounted by leaf spring assemblies that have the respective fastening section in a centre area, the centre section of the armature needs to be retracted from the respective centre axis of the fastening locations to allow maximum construction volume for the stator that may be only arranged opposite to the armature. The back side of the centre section of the armature may then be as close as possible to the housing of the linear motor. As the end sections of the armature need to be fastened to the inner fastening section of the spring assemblies, the connecting sections connect the end parts with the retracted centre section.

The term "spring assemblies" in the present disclosure is used to mean all spring assemblies of a resonant linear motor as proposed, i.e. this term may include at least a first armature mounting spring assembly or at least a first secondary mass mounting spring assembly. Each of the spring assemblies may be realized by at least one flat leaf spring in accordance with the present disclosure or by a stack of at least two of such flat leaf springs. The flat leaf springs are planar in a rest state (i.e. when they are not deformed) and thus extend in a plane (neglecting the thickness of the leaf spring or of the stack of leaf springs). The flat leaf springs have a spiral-like structure, i.e. the flat leaf spring comprises a spring arm that spirals from a centre area of the flat leaf spring to an outer area. In accordance with the present invention, a radial beam in the plane of extension of the flat leaf spring originating from the centre of area of the flat leaf spring or from the center of area of an inner fastening section always crosses for all angles (i.e. 0 degrees to 360 degrees) the spring arm at least once. In accordance with at least one aspect of the present disclosure, all spring assemblies may have the same shape and may be arranged with identical orientation (i.e. they are all aligned with respect to the longitudinal direction or, in other words, superimposed when viewed along the longitudinal direction).

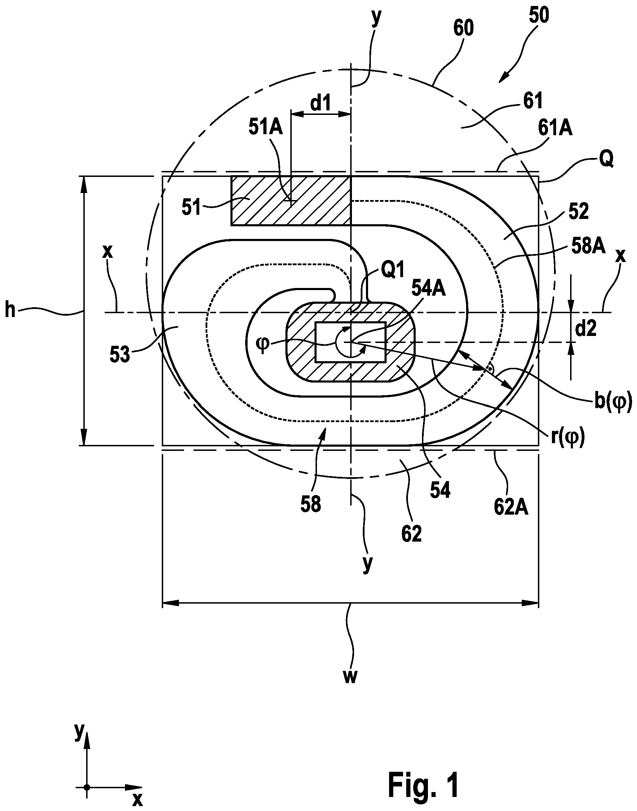

In accordance with at least one aspect of the present disclosure, the shape of the spring assemblies in at least a half of the leaf spring may be approximated by a circle from which a section is cut away, where the height of the section is at least about 10% of the diameter of the circle, optionally at least about 15% of the diameter, further optionally at least about 20% of the diameter, and even further optionally at least about 25% of the diameter, even though higher values are not excluded, e.g. at least 30%, at least 35% etc. As the shape of the spring assemblies may essentially define the cross sectional shape of the linear motor, such a shape provides additional construction volume in parallel to the linear motor in case the linear motor is disposed in a housing (of a handle section of an electric device) having an inner cavity that is essentially circular in cross section. Additional or alternative aspects of spring assemblies in accordance with the present disclosure are described in the following, in particular with reference to Fig. 1.

Fig. 1 is a depiction of an example embodiment of a flat leaf spring 50 that may be utilized in a linear motor as proposed. Fig. 1 shows the general topology of the flat leaf spring 50 in its plane of extension spanned by axes x and *y.* The flat leaf spring 50 may have a, in particular homogeneous thickness in z direction (i.e. in a direction that is perpendicular to the paper plane in which the leaf spring 50 is depicted). The thickness may be in the range of between about 0.1 mm to about 1.0 mm, optionally a thickness in the range of between about 0.3 mm to about 0.5 mm may be chosen. In some embodiments, thicknesses of between 0.35mm to 0.4 mm may be used. Such flat leaf springs as shown may in particular be made from a sheet of stainless steel (in particular from a suitable spring steel), e.g. by stamping or laser cutting, even though other materials, in particular other metal sheet materials such as brass shall not be excluded and also other manufacturing techniques such as regular cutting shall also not be excluded.

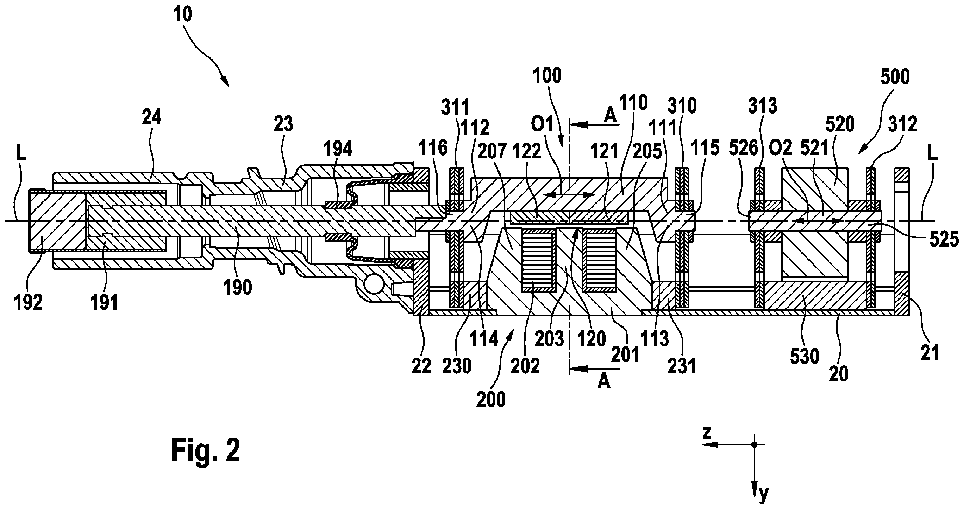

The flat leaf spring 50 has a generally spiral-like topology. The flat leaf spring 50 has at a top left position an outer fastening section 51, then a spiral-like spring arm 58 follows that is composed of a first spring arm section 52 and a second spring arm section 53. At the other end of the spiral-like spring arm 58 in a more central position close to a center area 59 of the leaf spring 50, the spring arm 58 is concluded by an inner fastening section 54. Due to the spiral-like topology, the outer fastening section 51 lies at the outside of the leaf spring and the inner fastening section 54 lies more centric within the leaf spring area. That means that the drive coupling axis (i.e. longitudinal axis L as indicated in Fig. 2) is forced to lie near the centre of the leaf spring area if the outer fastening section is used for fixation of the leaf spring 50 at a motor housing 20 (as shown in Fig. 2).

Generally, the flat leaf spring 50 consists of an inner fastening section 54, an outer fastening section 51, and a spring arm 58 that connects the inner and the outer fastening sections 54, 51 and spirals around a center of area 54A of the inner fastening section 54 along an angular range of at least 360 degrees. Generally, the flat leaf spring 50 is oblate in its plane of extension, i.e. a ratio of a width w of the flat leaf spring 50 and of a height h of the flat leaf spring is larger than 1.0, in particular this ratio is at least 1.33. As is shown in Fig. 1, the smallest possible rectangle Q that still fully envelopes the flat leaf spring 50 has a small side and a long side that coincide with the height and width of the flat leaf spring 50. A Cartesian coordinate system is defined with respect to this rectangle Q. The origin of the coordinate system is located in the center of area Q1 of the rectangle Q and the x axis then coincides with the long axis of the rectangle Q and the y axis coincides with the small axis of the rectangle Q. The width w of the flat leaf spring 50 is measured in x direction and the height of the flat leaf spring is measured in y direction.

The shown example embodiment of a flat leaf spring 50 has various features of a generally optional character that will be described in the following. For sake of clarity, a flat leaf spring for use in a linear motor as proposed may have none of these further features, may have one, several or all of the described features.

The outer fastening section 51 may be used for fixation of the flat leaf spring with respect to a housing and the inner fastening section 54 may be used to couple to a movable part such as a motor armature as will be described further below.

Thus, the outer and inner fastening sections 51 and 54 are in a mounted state connected with parts that will move relative to each other. The outer and the inner fastening section may stay essentially flat when the spring is deformed, in particular if they are connected over their full area (shaded areas in Fig. 1) with, e.g., a housing part or an armature of a motor. While the outer fastening section 51 is shown to be closed area while the inner fastening section is shown to have a central bore, the design of the fastening sections is free to the skilled person and could adapt to the design needs, e.g. also the outer fastening section could have a central bore and/or the inner fastening section 54 could be a closed area or one or both fastening section could have two or even more bores.

The spring constant of the leaf spring 50 can be influenced and tuned by setting the dimensions of the flat spring leaf (i.e. its width in x direction, its height in y direction and its thickness in z direction) and generally its topology. Further, in order to set a particular spring constant, two or more flat leaf springs 50 may be stacked in z direction to form a leaf spring assembly, which leaf spring assembly then provides a spring constant that could otherwise only be provided by a much larger single leaf spring (larger in its width and height values, i.e. its x and y extensions, or by a much thicker leaf spring as the spring constant is generally proportional to the spring volume). As is obvious from the topology of the flat leaf spring 50 depicted in Fig. 1 and the previous description, the flat leaf spring 50 allows for a movement of the outer and inner fastening sections 51 and 54 relative to each other in z direction under a given spring constant *k_{z}* that acts to bring the leaf spring 50 back into a single extension plane (the rest state of the flat leaf spring). The spring constants *kₓ* and *k_{y}* acting in x and y direction, respectively, are much larger than the spring constant *k_{z}*. Thus, utilization of the flat leaf spring 50 or of stacked leaf spring assemblies of two or more flat leaf springs 50 in a linear motor as shown in Fig. 2 lead not only to return forces acting in z direction against displacement of an armature or a secondary mass from their respective rest positions, but also allow for mounting of the armature and the secondary mass at a motor housing without any further bearings such as ball bearings or slide bearings as the flat leaf springs provide for stable support in x and y direction.

The center of area 51A of the outer fastening section 51 may be offset with respect to the y axis by a distance d1 (i.e. the location of the center of area 51A of the outer fastening section is then located at x = -d1 in the above defined Cartesian coordinate system), where in some embodiments, d1 may be in the range of between about 0.1 mm to 10 mm. Additionally or alternatively, the center of area 54A of the inner fastening area 54 may be offset with respect to the x axis by a distance d2 (i.e. the center of area 54A of the inner fastening section is then located at x = 0 and y = -d2), where in some embodiments, d2 may be in the range of between about 0.1 mm to 10 mm. These offsets d1, d2 of the first and/or the second fastening sections 51 and 54 may in particular be useful to increase the overall length and/or the angular length of the spiral-like spring arm 58 over designs where at least one of the outer and inner fastening sections is not offset and thus these offsets likely lead to changes, in particular an improvement of the spring characteristics of the leaf spring 50 for the intended use. In particular, the spring arm 58 can then extend over an angular range of at least about 360 degrees with respect to the center of area 54A of the inner fastening section 54.

The spiral-like spring arm 58 has in both, its first and second spring arm sections 52 and 53 varying arm widths b (where the arm width is measured in a direction perpendicular to a centre line 58A of the spring arm 58). As is indicated in Fig. 1, the arm width b(ϕ) may be determined as a function of the angular angle position ϕ, where ϕ = 0 degrees would be the start angle of the spring arm where it is connected with the inner fastening section 54. In the shown embodiment, the angular end value would be ϕ = 360 degrees where the spring arm 58 is connected with the outer fastening section 51. For illustrative purposes, a vector r(ϕ) is depicted in Fig. 1 for a given angular value ϕ, which vector originates in the center of area 54A of the inner fastening section 54 and extends up to the point where the vector r(ϕ) intersects the centre line 58A of the spring arm 58. The arm width b(ϕ) is then measured in a direction being perpendicular to the centre line 58A of the spring arm 58 as is indicted in Fig. 1.

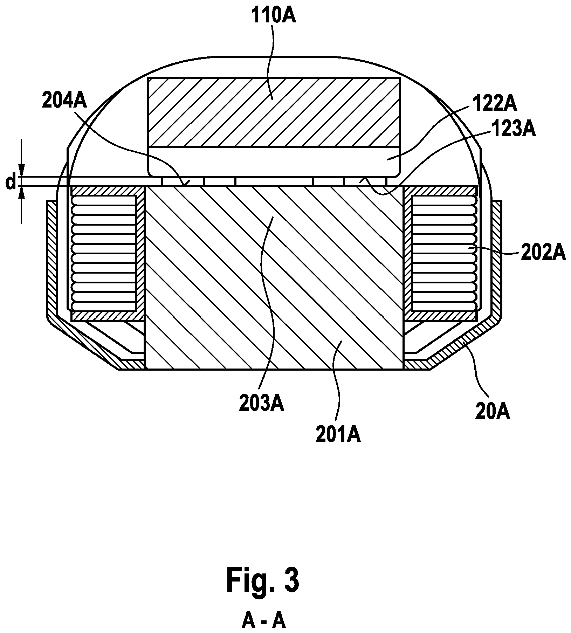

In the shown embodiment, the arm width b of the first spring arm section 52 increases from a start width value of the width close to the outer fastening section 51 to a centre width value more or less at its maximum extension in positive x direction that may be increased with respect to the start width value by 150% (i.e. by a factor of 1.5). The initial start width value may again about be reached where the first spring arm section 52 extends most in negative y direction, i.e. where the first spring arm section 52 merges into the second spring arm section 53. As is shown in Fig.1, the part of the spring arm 58 where the first and the second spring arm sections 52 and 53 merge may have a flat outer edge extending in x direction (i.e. this outer edge is parallel to the x axis) The maximum width value of the second spring arm section 53 may actually increase to a value of 200% (or more) of the start width value. This higher increase in arm width may be considered as a consequence of the higher curvature radius of the second spring arm section 53 which needs to spiral towards the center area of the flat leaf spring 50, whereas the first spring arm section 52 has a lower curvature radius. Further, the arm width of the second spring arm section 53 may become lower, e.g. by 25% of the start width value where the second arm section 53 merges into the inner fastening section 54. The exact design and topology may be found by numerical simulation for a given linear motor design and the changes in the radial width of the spiral-like spring arm 58 may in particular be chosen to minimize stress in the leaf spring 50 during operation and thus the shown and discussed optimization features have a positive influence on the wear of the leaf spring 50. The values given here with respect to the example embodiment shown in Fig. 3 are exemplary only and any other values may as well be considered, depending on the particular shapes, dimensions, and materials and on the oscillation amplitudes the leaf springs have to withstand. Generally, the spring arm may have a radial width that behaves similar as the curvature radius of the central line of the spring arm, e.g. the radial width of the spring arm may increase proportional to the line curvature of the central line of the spring arm.

In order to illustrate a consequence of the oblate structure of the here generally discussed flat leaf spring, the following section takes a further approach to characterize the form and topology of the proposed flat leaf spring. At least one half of the leaf spring 50 may be approximated by a circle 60 drawn in the extension plane such that at least one section 61 of the circle can be cut away from the circle or such that two sections 61, 62 can be cut away from the circle by two parallel lines 61A, 62A (in the shown embodiment, these two parallel lines are parallel to the x axis) so that the remaining shape still envelopes the whole leaf spring. Here, "approximation by a circle" means that the smallest possible circle is chosen that still envelopes the whole flat leaf spring. The height of each of the cut-away sections of the circle in y direction (assuming that the cut lines 61A, 62A are parallel to the x axis) may be in a range of between about 1% to about 100% of the radius of the circle. While the cut-away sections may have equal or similar height in y direction, the cut-away height may in particular be chosen to be different, e.g. the relative cut away height for a leaf spring topology as shown in Fig. 3 may be 5% for the lower section (i.e. in the negative y range) and 30% for the upper section (i.e. in the positive y range). As the outer shape of the linear motor housing can follow the shape of the leaf springs (which means that all the other parts shown in Fig. 2 also have to fit into this shape defined by the leaf springs), this may result in free construction space inside of a circularly shaped housing of an electric device in which the linear motor will be realized. Thus, the flattened or oblate cross section of the linear motor may leave construction space inside of the housing of the electric device that can be used for, e.g., accommodating a (optionally flexible) printed circuit board or other parts of the electric device. In other words, the flat leaf spring may fit into the smallest rectangle as described above, where the corners of the rectangle are rounded.

In some embodiments, the flat leaf spring is made from spring steel sheet material (material number 1.4310) and the thickness of the individual leaf springs may be between about 0.35 mm and about 0.4 mm.

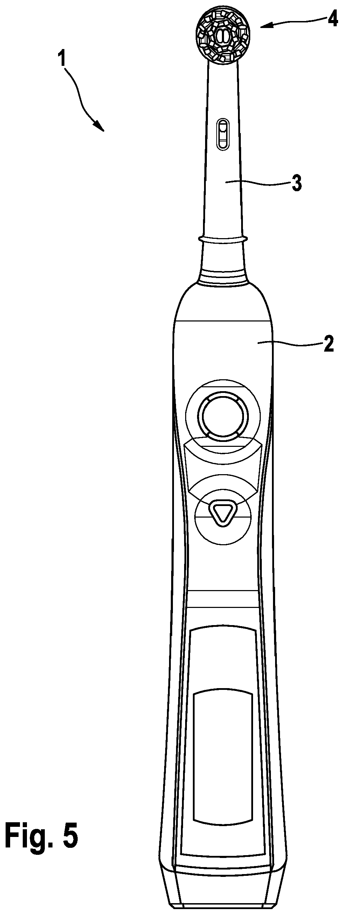

Fig. 2 is a longitudinal cut through an example embodiment of a linear motor 10 in accordance with one or more aspects of the present disclosure, which linear motor 10 here additionally comprises a drive shaft assembly arranged in a tubular motor housing extension 23. The linear motor 10 may in particular be utilized in an electric device 1 as will be discussed in connection with Fig. 5. The linear motor 10 may have a motor housing 20, an armature 100 mounted for linear oscillation along a longitudinal direction (which is parallel to a longitudinal axis L) as indicated by double arrow O1, a stator 200, and a secondary mass unit 500 mounted for linear oscillation along the longitudinal direction as indicated by double arrow O2. In some embodiments, a coupling unit for mechanically coupling the armature 100 to the secondary mass unit 500 may be present. A Cartesian coordinate system is indicated, where the z axis coincides (i.e. is parallel to) with the longitudinal axis L and the y axis is perpendicular to the z axis in the paper plane. The x axis extends into the paper depth.

The stator 200 comprises a coil core 201 that may be fixedly connected with the motor housing 20 and a stator coil 202 is wound around the coil core 201. While in Fig. 2 an E-shaped (i.e. three-toothed) back iron is shown, this shall not exclude that other back-iron designs may be utilized, e.g. a U-shaped (i.e. two-toothed) back iron. The teeth of the coil core 201 have end surfaces that face a permanent magnet arrangement 120 mounted at a centre section 110 of the armature 100. The linear motor 10 may comprise at least two electrical contacts for providing electric current to the stator coil 202 during operation. The coil core 201 may be made from a stack of isolated sheets such as ferromagnetic metal sheets ("soft iron", e.g. Fe-Si based metal) as is known in the art. In some example embodiments, the length of the end surface of the centre leg of an E-shaped coil core in z-direction may be about 3.0 mm and the respective length of the end surface of the other two legs may be about 2.0 mm.

The armature 100 may also (at least partly) be made from a stack of isolated sheets such as ferromagnetic metal sheets (e.g. Fe-Si based metal) as is known in the art. The armature 100 may be mounted to the housing 20 by means of a first and a second armature mounting spring assembly 310, 311 and the secondary mass unit 500 may be mounted to the motor housing 20 by means of a first and a second secondary mass mounting spring assembly 312, 313. The armature mounting spring assemblies 310 and 311 and/or the secondary mass mounting spring assemblies 312 and 313 may in particular be realized as flat leaf springs that each extend in a rest state in a plane being perpendicular to the longitudinal axis L, which flat leaf springs may in particular be realized as the generally proposed flat leaf spring discussed above with reference to Fig. 1, which has a spiral-like shape with an outer fastening section being arranged at the outside of the flat leaf spring and an inner fastening section being arranged more in a centre area of the flat leaf spring. Each of the mounting spring assemblies 310, 311, 312, 313 may be at one end (i.e. with an outer fastening section) fixedly connected at or with relation to the motor housing 20 and at another end (i.e. at an inner fastening section) fixedly connected with the armature 100 or the secondary mass unit 500, respectively. As shown in Fig. 2, each of the mounting spring assemblies 310, 311, 312, 313 may be mounted at the motor housing 20 by means of fastening elements 230, 231, or 530, which fastening elements may each be fixedly mounted at the motor housing 20 and may be fixedly mounted at the outer fastening section of the respective mounting spring assembly. Each of the mentioned spring assemblies 310, 311, 312, or 313 may be made from a single flat leaf spring or from a stack of (in particular identically shaped) flat leaf springs stacked in z direction. Each of the leaf springs may in particular have a certain thickness in z direction to achieve a target spring constant. The thickness and the number of the leaf springs may be set to tune the characteristics of the components of the linear motor 10 such as the resonance and anti-resonance (or: cancellation) frequencies (the anti-resonance or cancellation frequency is the frequency at which the armature and the secondary mass do not only move with essentially opposed phase but also with essentially identical amplitude such that the vibrations transferred to the motor housing are minimal). While a high spring constant could be achieved by a thick leaf spring instead of a stack of two thinner leaf springs, it has been found that a thicker leaf spring has a different deflection curve than a stack two thin leaf springs and that the latter has a better fatigue resistance and thus may improve the long life behavior of the overall motor design. The mounting spring assemblies may in particular be arranged such that they are aligned in longitudinal direction, i.e. such that the identically shaped flat leaf springs are superimposed over each other.

The armature 100 may have fastening protrusions 115 and 116 that extend in z direction and that are centrically disposed with respect to the longitudinal axis L. As shown in Fig. 2 for an example embodiment of a linear motor in accordance with the present disclosure, the left-side (where left and right are used with respect to the paper plane on which the linear motor is depicted) fastening protrusion 116 may be fixedly connected with the left-side armature mounting spring assembly 311. Further, the right-side fastening protrusion 115 may be fixedly connected with the right-side armature mounting spring assembly 310. Additionally, the left-side fastening protrusion 116 may establish a connection with a drive shaft 190 such that the linear oscillation of the armature 100 indicated by double arrow O1 is transferred during operation to the drive shaft 190 and from the drive shaft 190 to a functional element to be driven into motion (as explained with reference to Fig. 5). The drive shaft 190 may be centrically disposed with respect to the longitudinal axis L. The armature and the drive shaft may be connected by mechanical means (e.g. a snap-fit connection), by force fit element pushed together, or they may be connected by a separate process, e.g. a welding process.

Further, the secondary mass 520 may have fastening protrusions 525 and 526 that extend in z direction (i.e. in longitudinal extension direction) and that are centrically disposed along the longitudinal extension axis L. The right-side fastening protrusion 525 may be fixedly connected with the right-side secondary mass mounting spring assembly 312. Further, the left-side fastening protrusion 526 may be fixedly connected with the left-side secondary mass mounting spring assembly 313.

As will be explained in more detail below, the secondary mass unit 500 is utilized to be excited into a counter-oscillation with respect to the armature oscillation during operation. Thus, the vibrations transferred to the motor housing 20 (and thus eventually to a handle section of the electric device in which the linear motor 10 may be mounted) will on the one hand be reduced over a design without a secondary mass unit 500 and the vibrations transferred to the housing will on the other hand at least partially cancel each other out due to the counter-phase oscillation of the secondary mass unit 500 with respect to the oscillation of the armature 100.

The armature 100 may comprise several sections, namely two end sections 113 and 114, one centre section 110 and two intermediate sections 111 and 112 that each connect one end of the centre section 110 with a respective end section 113 or 114, i.e. the right intermediate section 111 connects the right end of the centre section 110 with the right end section 113 and the left intermediate section 114 connects the left end of the centre section 110 with the left end section 114. While the right and left end sections 113 and 114 may be centrically disposed around the longitudinal axis L, which has a certain distance to the motor housing 20, the centre section 110 is disposed with only a small distance to the motor housing 20, i.e. the centre section 110 extends along a longitudinal axis that is parallel to the longitudinal axis L and that lies closer to the motor housing 20. Hence, the centre section 110 is retracted towards one side of the motor housing 20 so that more construction volume is made available between the centre section 110 and the opposite side of the motor housing 20. In contrast to other linear motor designs known from electric toothbrushes where the stator is arranged around the armature, this particular design of the armature 100 as discussed allows arranging the stator 200 opposite to the centre section 110 of the armature 100 at the opposite side of the motor housing.

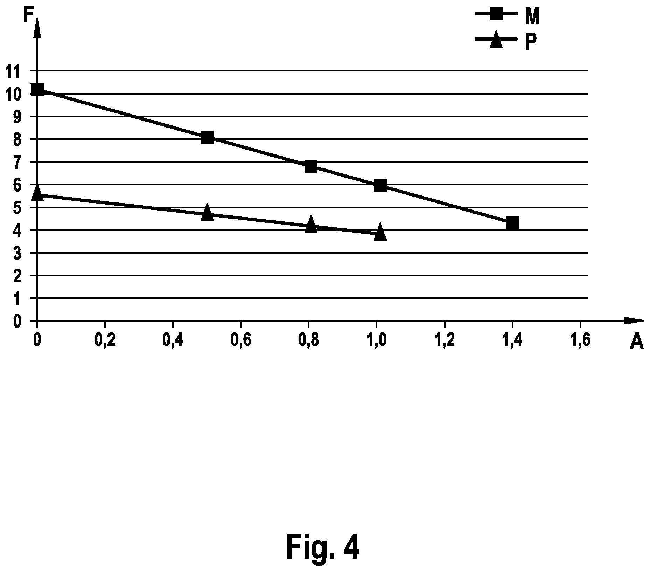

The permanent magnet assembly 120 mentioned before may be disposed on a side of the centre section 110 of the armature 100 that faces the end surfaces of the teeth of the coil core 201. The permanent magnet assembly 120 is here realized by two abutting permanent magnets 121 and 122 that are arranged side-by-side in z direction. In an example embodiment, the permanent magnets may have a height in x-direction of 1.3 mm, a width in z-direction of 11.5 mm, and a length in y-direction of 6.0 mm. The permanent magnets may be made from (sintered) FeNdB (neodymium-iron-boron) material. In particular, an air gap between the end surfaces of the coil core 201 and the permanent magnet arrangement 120 may extend close to, in particular approximately centrically with respect to the longitudinal axis L, which design may lead to lower tilting forces during operation, which supports using the mounting spring assemblies also as bearings for the armature. This leads on one hand to a more simple motor design, hence to a relatively low cost realization of the linear motor, and on the other hand to a design option that allows higher forces to be provided by the linear motor at a given construction volume (as will be discussed further below with reference to Fig. 4).

The two permanent magnets 121 and 122 are mounted at a central section 110 of the armature 100 such that end surfaces of the permanent magnets 121, 122 face end surfaces of three legs 203, 205, 207 of the E-shaped coil core 201. In a rest state, the end surface of the centre leg 203 of the coil core 201 is arranged centrically between the end faces of the two permanent magnets 121, 122. The armature 100 is coupled to a drive shaft 190, either directly (e.g.by a welded connection or a force-fit connection) or via a coupling adapter. The drive shaft 190 is centrically aligned with the longitudinal axis L, which longitudinal axis L is parallel to the longitudinal direction along which the linear oscillation of the armature 100 occurs. An air gap between the end surfaces of the permanent magnets 121, 122 and of the end faces of the legs of the coil core is arranged to be close to the longitudinal axis L, in particular the vertical centre line of the air gap may deviate from the longitudinal axis L by not more than about 1 mm, optionally by not more than 0.5 mm.

The stator 200 is fixedly connected with a motor housing 20. The motor housing 20 may comprise a bottom cap 21 and a top cap 22 for added stability of the motor housing 20. The drive shaft 190 may extend in a hollow of a generally tubular front housing 23 that ends in a connection section 24, which may comprise a connector structure suitable to establish an in particular mechanical connection with a respective connector structure at an attachment section. The drive shaft 190 may have at its free end (opposite to its end where it is coupled to the armature 100) a holder section 191 that may accommodate a magnetic coupling element 192 for establishing a magnetic connection with a respective magnetic coupling element of an attachment section such that the drive shaft 190 can transfer the linear oscillation provided by the armature 100 to a functional element mounted at the attachment section for driven movement. A bellows seal 194 may be arranged between the drive shaft 190 and the front housing 23 to seal the linear motor against liquids and/or dust.

Fig. 3 is a cross-sectional cut through the linear motor 10 shown in Fig. 2 along the plane that is indicated by line A-A in Fig. 2 with view direction towards the drive shaft. The cross sectional cut goes through the centre section 110 of the armature at which the second permanent magnet 122 is mounted, which second permanent magnet 122 has an surface 123 that faces the end surface 204 of the centre leg 203 of the coil core 201. The end surface 204 of the centre leg 203 and the end surface 123 of the second permanent magnet 122 are arranged with an air gap between them, which air gap may have a width d that may be in a range of between about 0.1 mm to about 0.6 mm, optionally in a range of between about 0.2 mm to about 0.5 mm, and further optionally in a range of between about 0.25 mm to about 0.4 mm. The stator coil 202 is wound around the centre leg 203 of the coil core 201.

Fig. 3 shows that the particular opposite arrangement of the stator 200 and of the armature 100 allows for optimally using the width and height of the cross sectional shape of the linear motor 10, which cross sectional shape is essentially defined by the shape of the flat leaf springs of the mounting spring assemblies, which mounting spring assemblies are here all having the same dimensions and are aligned. As a result of this arrangement, the linear motor as proposed can provide a higher maximum driving force than other linear motors having the same construction dimensions and volume but where a different motor design such as a concentric arrangement of stator and armature is employed.

In the following, the operation of a linear motor as proposed is described, where reference is made to the example embodiments shown in Fig. 2 and Fig. 3, which should not be interpreted as limiting. In operation, an alternating coil current is applied from an energy source via a motor control circuit to the stator coil 202. An alternating electromagnetic field develops around the stator 200 that interacts with the permanent magnet arrangement 120 of the armature 100 and leads to an alternating (i.e. oscillatory) linear movement of the armature 100. The alternating coil current provided to the stator coil 202 may have a frequency at or close to the anti-resonance (or: cancellation) frequency of the overall oscillating system. The respective anti-resonance frequency (or frequencies) may, e.g., be determined empirically or by means of numerical simulations. The linear motor 10 may be designed in a way that a typical maximum amplitude value of the linear armature oscillation lying in a range of between about ±0.1 mm to about ±2.0 mm is achieved when providing a maximally available current. Optionally, this range may be chosen to be between ±0.5 mm to about ±1.5 mm, further optionally between ±0.8 mm to about ±1.2 mm. In some embodiments, the maximum amplitude value may be chosen to be about ±1.0 mm.

It is stated here that the use of leaf springs as shown in Fig. 1 essentially confine the possible movement of the armature 100 to an oscillatory linear movement in z direction. Nevertheless, the deformation a leaf springs 50 shown in Fig. 1 (or other spiral-like leaf springs) experiences during operation will inevitably lead to a slight side motion of the second fastening section 54. One may now arrange one of the armature mounting spring assemblies 310, 311 in a first orientation (e.g. the orientation as shown in Fig. 1), but the other armature mounting spring assembly in a mirrored (i.e. with respect to the y axis in Fig. 1) orientation to compensate the side motion. But such an arrangement would likely lead to a skewing of the armature 100 with respect to the z axis. In contrast, in case that the armature mounting spring assemblies 310 and 311 would be mounted with identical orientation, this would lead to an overall side motion of the armature 100, which is likely to be a better controllable movement (in terms of the overall design of the electric device in which the linear motor shall be used) than any skewing movement.

The vibrations of the linearly driven armature 100 are transferred to the secondary mass unit 500, which is mounted by the secondary mass mounting spring assemblies 312 and 313 at the motor housing 20, via the motor housing 20 acting as a joint base. Assuming that the excitation frequency of the applied stator coil current is predetermined accordingly, a counter-phase oscillation of the secondary mass unit 500 can thereby become excited, which counter-phase oscillation is at least close to 180 degrees phase shifted to the oscillatory movement of the armature 100.

It is known to utilize linear motors in electric devices, e.g. oral hygiene devices such as the Oral-B™ Pulsonic, where the linear motor drives a replacement brush head that is attached to a drive shaft providing linear oscillations having an oscillation peak amplitude of about ±0.5 mm into a respective linear oscillatory movement at a frequency of about 255 Hz. The linear motor of the Oral-B™ Pulsonic has a volume of about 18.4 cm³ and can provide a maximum driving force during operation of about 4.5 Newton (N) and gets locked if a force of about 5.5 N is applied at the linear motor (as will be seen below with reference to Fig. 4). In contrast, a linear motor as proposed can be realized having a volume of about 14.8 cm³ (48.5 mm length, 21 mm width, and 14.5 mm height), which linear motor can provide via its drive shaft a linear oscillation having an oscillation peak amplitude of about ±1.0 mm at a frequency of about 150 Hz and can provide a maximum driving force during operation of about 6.0 N and may get locked if a force of about 10.0 N is applied at the linear motor. The respective motor behavior is shown in Fig. 4, where the force (F) vs. amplitude (A) diagram can be seen for the two mentioned motors (where P indicates the Oral-B™ Pulsonic motor and M indicates the example embodiment of a proposed motor defined in this paragraph). The force F relates to the maximum current setting allowed for the respective motor. In Fig. 4 it can be seen that motor P provides a maximum force F of about 4.5 N at a peak amplitude value of about 0.5 mm and that motor M provides a maximum force of about 6 N at a peak amplitude value of about 1.0 mm. With increasing applied force at the motor, the provided amplitude breaks down. For the previously known motor P, an applied force of 5.5 N will lead to a fully locked motor and no amplitude will be provided anymore. For the here discussed and proposed example embodiment motor M, the motor would become locked at an applied force of 10 N. Thus, motor M can not only be used to drive a replacement brush head into linear oscillatory movement but also to drive a functional element mounted at the housing of a replacement brush into a movement different to a linear oscillatory motion, i.e. a motion that requires a gear unit and thus needs to overcame additional load. One aspect enabling the high force of the proposed linear motor in comparison to a known motor having similar or even higher volume is the particular motor design discussed with reference to Fig. 2 with use of flat leaf springs as shown and discussed with reference to Fig. 1. This allows making a linear motor with a low volume that provides a high force.

Tests had been performed with an electric toothbrush as electric device utilizing a linear motor as proposed that is disposed in a handle section and an attachment section having as functional element a known replacement brush head (e.g. Oral-B™ Precision Clean) mounted for oscillatory rotation around an axis that is perpendicular to the longitudinal axis along which the linear motor vibrates. Firstly, it had been found that a linear motor providing a linear oscillatory movement having an amplitude of about ±1.0 mm around a rest position can drive the brush head into an oscillatory rotation having an angular amplitude of about ±20 degrees around a rest position, which ±20 degrees represents the angular amplitude provided by current electric toothbrushes such as the Oral-B™ Professional 5000 being equipped with an Oral-B™ Precision Clean. The angular amplitude of ±20 degrees was identified by sensory tests as a value that was preferred by at least a subgroup of test candidates also for the higher frequency of about 150 Hz against a frequency of about 75-85 Hz. Secondly, it had been found that a maximum driving force of 6 N at a peak amplitude value of ±1.0 mm is required to provide a good cleaning result for such an electric toothbrush. At a lower driving force, the angular peak amplitude breaks down from ±20 degrees too fast under regular cleaning conditions.

Fig. 5 shows an example embodiment of an electric device 1 in accordance with the present disclosure, here realized as an electric toothbrush, which electric device 1 may comprise a linear motor in accordance with the present disclosure. The electric device 1 may comprise a handle section 2 and a, in particular detachable attachment section 3 that is shown in an attached state, i.e. in a state where the attachment section 3 is attached to the handle section 2. The attachment section 3 may comprise a first connector structure and the handle section 2 may comprise a second connector structure enabling a, in particular detachable connection between attachment section 3 and handle section 2, e.g. the attachment section 3 may comprise one or two flexible snap hooks and the handle section 2 may comprise one or two respective depressions into which snap noses of the snap hooks can engage. The attachment section 3 may in particular comprise a functional element 4, here realized as a brush head, which brush head may be mounted for driven movement. As has been explained, the linear motor may be disposed in the handle section 2 and may comprise a drive shaft that is functionally coupled with the functional element 4 in the attached state so that the drive shaft transfers motion provided by the linear motor during operation to the functional element 4. E.g. the linear motor may provide a linear oscillatory motion via the drive shaft, which linear oscillation is transferred to the functional head 4 and may be converted by a respective gear unit into an oscillatory rotation of the functional element 4 around a rotation axis that may in particular be essentially perpendicular to a longitudinal axis along which the drive shaft vibrates. Of course, other movements of a functional element may be contemplated, e.g. an oscillatory wiping motion around an axis that is essentially parallel to the longitudinal axis, a rotation or oscillatory rotation around a rotation axis that is angled with respect to the longitudinal axis etc. Instead of being realized as an electric toothbrush, the electric device 1 may be realized, e.g., as another oral hygiene device such as an electric flossing device, an electric tongue scraper, an electric interdental cleaner, an electric tooth stick or as an electric skin treatment device such as an electric massage device or an electric exfoliation brush etc.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A flat leaf spring (50) for a linear motor (10), wherein the spring consists of an inner fastening section (54), an outer fastening section (51), and a spring arm (58) connecting the inner fastening section and the outer fastening section, in particular wherein the flat leaf spring is made from a single sheet such that the inner fastening section, the spring arm, and the outer fastening section are integral with each other, wherein the spring arm spirals around the center of area (54A) of the inner fastening section and the flat leaf spring is oblate in its plane of extension **characterized in that** a ratio between a width (w) of the leaf spring and a height (h) of the flat leaf spring has a value of at least about 1.33, the direction in which the height is measured being perpendicular to the direction in which the width is measured, and wherein the spring arm spirals around the centre of area of the inner fastening section over an angular range of at least 360 degree.

2. The leaf spring in accordance with claim 1, wherein the centre of area (54A) of the inner fastening section (54) is asymmetrically positioned with respect to the height (h) of the spring and symmetrically with respect to the width (w) of the spring.

3. The leaf spring in accordance with any one of claims 1 to 2, wherein the centre of area (51A) of the outer fastening section (51) is asymmetrically positioned with respect to the width (w) of the spring.

4. The leaf spring in accordance with any one of claims 1 to 3, wherein the spring arm (58) has an arm width (b(ϕ)) measured perpendicular to a centre line (58A) of the spring arm (58), which arm width varies over the length of the spring arm and the arm width is larger in two essentially opposite spring arm sections (52, 53) where the spring arm is bent in comparison to the width of the arm in regions where the spring arm essentially extends in a straight manner.

5. A linear motor (10) comprising
an armature (100) mounted for driven linear oscillation essentially along a longitudinal direction (L); and
at least a first and a second armature mounting spring assembly (310, 311) that are each perpendicularly arranged with respect to the longitudinal direction;
wherein the first and the second armature mounting spring assemblies are each realized by at least one of the flat leaf springs (50) in accordance with any one of the previous claims, optionally wherein at least the first or the second armature mounting spring assembly is a stack of at least two of the flat leaf springs in accordance with any of the previous claims, and the first and second armature mounting spring assemblies are in positional alignment with each other in the longitudinal direction.

6. The linear motor in accordance with claim 5, further comprising
a secondary mass unit (500) mounted for linear oscillation along the longitudinal direction (L) and intended for counter oscillation with respect to the armature (100); and
at least a first and a second secondary mass mounting spring assembly (312, 313) that are each perpendicularly arranged with respect to the longitudinal direction;
wherein the first and the second secondary mass mounting spring assemblies are each realized by at least one of the flat leaf springs (50) in accordance with any one of the claims 1 to 7, optionally wherein the first or the second secondary mounting spring assembly is a stack of at least two of the flat leaf springs in accordance with any of the claims 1 to 7 and the first and second secondary mass mounting spring assemblies are in positional alignment with each other in the longitudinal direction and with the first and second armature mounting spring assemblies (310, 311).

7. The linear motor in accordance with any one of claims 5 to 6, wherein the armature (100) is fixedly connected with the inner fastening section (54) of the at least one flat leaf spring (50) of the first armature mounting spring assembly (310) and with the inner fastening section (54) of the at least one flat leaf spring of the second armature mounting spring assembly (311).

8. The linear motor in accordance with any one of claims 5 to 7, wherein the outer fastening section (51) of the at least one flat leaf spring (50) of the first armature mounting spring assembly (310) and the outer fastening section of the at least one flat leaf spring of the second armature mounting spring assembly (311) is fixedly connected with respect to a stator (200) of the linear motor.

9. An electric device (1), in particular an electric oral hygiene device, comprising a functional element (4) mounted for driven movement and a linear motor (10) in accordance with any of the claims 5 to 8, wherein the linear motor is arranged for driving the functional element of the electric device.

10. The electric device of the previous claim, wherein the functional element (4) is mounted for driven rotational oscillation around a rotation axis that is angled with respect to the longitudinal direction and a gear is arranged between the linear motor and the functional element.

11. The electric device of one of the two the previous claims, wherein the linear motor is designed to provide an oscillation peak amplitude in the range of between about ±0.5 mm to about ±1.5 mm around a centre position at a maximum driving force of at least about 5 Newton, optionally an oscillation peak amplitude of about ±1.0 mm around a centre position at a maximum driving force of at least about 5.5 Newton.

## Patentansprüche

1. Flache Blattfeder (50) für einen Linearmotor (10), wobei die Feder aus einem inneren Befestigungsabschnitt (54), einem äußeren Befestigungsabschnitt (51) und einem Federarm (58) besteht, die den inneren Befestigungsabschnitt und den äußeren Befestigungsabschnitt verbinden, wobei insbesondere die flache Blattfeder aus einem einzelnen Blatt hergestellt ist, sodass der innere Befestigungsabschnitt, der Federarm und der äußere Befestigungsabschnitt integral miteinander ausgebildet sind, wobei sich der Federarm um das Zentrum des Bereichs (54A) des inneren Befestigungsabschnitts windet und die flache Blattfeder in ihrer Verlaufsebene abgeflacht ist, **dadurch gekennzeichnet, dass** ein Verhältnis zwischen einer Breite (w) der Blattfeder und einer Höhe (h) der flachen Blattfeder einen Wert von mindestens etwa 1,33 aufweist, wobei die Richtung, in der die Höhe gemessen wird, senkrecht zu der Richtung, in der die Breite gemessen wird, verläuft, und wobei sich der Federarm um das Zentrum des Bereichs des inneren Befestigungsabschnitts über einen Winkelbereich von mindestens 360 Grad windet.

2. Flache Blattfeder nach Anspruch 1, wobei das Zentrum des Bereichs (54A) des inneren Befestigungsabschnitts (54) bezüglich der Höhe (h) der Feder asymmetrisch und in Bezug auf die Breite (w) der Feder symmetrisch positioniert ist.

3. Blattfeder nach einem der Ansprüche 1 bis 2, wobei das Zentrum des Bereichs (51A) des äußeren Befestigungsabschnitts (51) in Bezug auf die Breite (w) der Feder asymmetrisch positioniert ist.

4. Blattfeder nach einem der Ansprüche 1 bis 3, wobei der Federarm (58) eine Armbreite (b(ϕ)) aufweist, die senkrecht zu einer Mittellinie (58A) des Federarms (58) gemessen wird, wobei die Armbreite über die Länge des Federarms variiert, und wobei die Armbreite in zwei im Wesentlichen gegenüberliegenden Federarmabschnitten (52, 53), in denen der Federarm gekrümmt ist, im Vergleich zur Breite des Arms in Bereichen, in denen der Federarm im Wesentlichen gerade verläuft, größer ist.

5. Linearmotor (10), umfassend
einen Anker (100), angebracht für angetriebene, lineare Oszillation im Wesentlichen entlang einer Längsrichtung (L); und
mindestens einen ersten und einen zweiten Anker zur Anbringung von Federanordnungen (310, 311), die bezüglich der Längsrichtung jeweils senkrecht angeordnet sind;
wobei der erste und der zweite Anker zur Anbringung von Federanordnungen jeweils durch mindestens eine der flachen Blattfedern (50) gemäß einem der vorstehenden Ansprüche ausgeführt sind, und wobei wahlweise mindestens der erste oder der zweite Anker zur Anbringung einer Federanordnung ein Stapel aus mindestens zwei der flachen Blattfedern gemäß einem der vorstehenden Ansprüche ist, und wobei der erste und der zweite Anker zur Anbringung von Federanordnungen in der Längsrichtung miteinander in Positionsausrichtung sind.

6. Linearmotor nach Anspruch 5, weiter umfassend
eine Sekundärmasseneinheit (500), angebracht zur linearen Oszillation entlang der Längsrichtung (L) und vorgesehen für die Gegenoszillation in Bezug auf den Anker (100); und
mindestens eine erste und eine zweite Sekundärmasse zur Anbringung von Federanordnungen (312, 313), die bezüglich der Längsrichtung jeweils senkrecht angeordnet sind;
wobei die erste und die zweite Sekundärmasse zur Anbringung von Federanordnungen jeweils durch mindestens eine der flachen Blattfedern (50) gemäß einem der Ansprüche 1 bis 7 ausgeführt sind, und wobei wahlweise mindestens die erste oder die zweite Sekundärmasse zur Anbringung einer Federanordnung ein Stapel aus mindestens zwei der flachen Blattfedern gemäß einem der Ansprüche 1 bis 7 ist, und wobei die erste und die zweite Sekundärmasse zur Anbringung von Federanordnungen in der Längsrichtung miteinander und mit dem ersten und zweiten Anker zur Anbringung von Federanordnungen (310, 311) in Positionsausrichtung sind.

7. Linearmotor nach einem der Ansprüche 5 bis 6, wobei der Anker (100) mit dem inneren Befestigungsabschnitt (54) der mindestens einen flachen Blattfeder (50) des ersten Ankers zur Anbringung einer Federanordnung (310) und mit dem inneren Befestigungsabschnitt (54) der mindestens einen flachen Blattfeder des zweiten Ankers zur Anbringung einer Federanordnung (311) fest verbunden ist.

8. Linearmotor nach einem der Ansprüche 5 bis 7, wobei der äußere Befestigungsabschnitt (51) der mindestens einen flachen Blattfeder (50) des ersten Ankers zur Anbringung einer Federanordnung (310) und der äußere Befestigungsabschnitt der mindestens einen flachen Blattfeder des zweiten Ankers zur Anbringung einer Federanordnung (311) in Bezug auf einen Stator (200) des Linearmotors fest verbunden ist.

9. Elektrische Vorrichtung (1), insbesondere eine elektrische Mundhygienevorrichtung, umfassend ein Funktionselement (4), angebracht zur angetriebenen Bewegung, und einen Linearmotor (10) nach einem der Ansprüche 5 bis 8, wobei der Linearmotor angeordnet ist zum Antreiben des Funktionselements der elektrischen Vorrichtung.

10. Elektrische Vorrichtung nach dem vorstehenden Anspruch, wobei das Funktionselement (4) angebracht ist zur angetriebenen Oszillation um eine Rotationsachse, die mit Bezug auf die Längsrichtung angewinkelt ist, und wobei zwischen dem Linearmotor und dem Funktionselement ein Getrieberad angeordnet ist.

11. Elektrische Vorrichtung nach einem der zwei vorstehenden Ansprüche, wobei der Linearmotor konzipiert ist, um eine maximale Schwingungsamplitude im Bereich zwischen etwa ±0,5 mm bis etwa ±1,5 mm um eine Mittenposition bei einer maximalen Antriebskraft von mindestens etwa 5 Newton bereitzustellen, wahlweise eine maximale Schwingungsamplitude von etwa ±1,0 mm um eine Mittenposition bei einer maximalen Antriebskraft von mindestens etwa 5,5 Newton.

## Revendications

1. Ressort à lame plat (50) destiné à un moteur linéaire (10), où le ressort est constitué d'une section de fixation interne (54), d'une section de fixation externe (51) et d'un bras de ressort (58) reliant la section de fixation interne et la section de fixation externe, en particulier où le ressort à lame plat est fabriqué à partir d'une feuille unique de telle sorte que la section de fixation interne, le bras de ressort et la section de fixation externe sont solidaires les uns des autres, dans lequel le bras de ressort décrit une spirale autour du centre de gravité de surface (54A) de la section de fixation interne et le ressort à lame plat est aplati dans son plan d'extension **caractérisé en ce qu'**un rapport entre une largeur (w) du ressort à lame et une hauteur (h) du ressort à lame plat a une valeur d'au moins environ 1,33, la direction dans laquelle la hauteur est mesurée étant perpendiculaire à la direction dans laquelle la largeur est mesurée, et dans lequel le bras de ressort décrit une spirale autour du centre de gravité de surface de la section de fixation interne sur une plage angulaire d'au moins 360 degrés.

2. Ressort à lame plat selon la revendication 1, dans lequel le centre de gravité de surface (54A) de la section de fixation interne (54) est positionné asymétriquement par rapport à la hauteur (h) du ressort et symétriquement par rapport à la largeur (w) du ressort.

3. Ressort à lame selon l'une quelconque des revendications 1 à 2, dans lequel le centre de gravité de surface (51A) de la section de fixation externe (51) est positionné asymétriquement par rapport à la largeur (w) du ressort.

4. Ressort à lame selon l'une quelconque des revendications 1 à 3, dans lequel le bras de ressort (58) a une largeur de bras (b(ϕ)) mesurée perpendiculaire à une ligne centrale (58A) du bras de ressort (58), largeur de bras qui varie sur la longueur du bras de ressort et la largeur de bras est plus grande dans deux sections de bras de ressort sensiblement opposées (52, 53) où le bras de ressort est plié par comparaison avec la largeur du bras dans des régions où le bras de ressort s'étend sensiblement de façon rectiligne.

5. Moteur linéaire (10) comprenant
un induit (100) monté pour une oscillation linéaire entraînée sensiblement le long d'une direction longitudinale (L) ; et
au moins un premier et un deuxième ensemble ressort de montage d'induit (310, 311) qui sont chacun disposés perpendiculairement par rapport à la direction longitudinale ;
dans lequel les premier et deuxième ensembles ressort de montage d'induit sont chacun réalisés par au moins un des ressorts à lame plats (50) selon l'une quelconque des revendications précédentes, éventuellement dans lequel au moins le premier ou le deuxième ensemble ressort de montage d'induit est une pile d'au moins deux des ressorts à lame plats selon l'une quelconque des revendications précédentes, et les premier et deuxième ensembles ressort de montage d'induit sont en alignement de position l'un avec l'autre dans la direction longitudinale.

6. Moteur linéaire selon la revendication 5, comprenant en outre
une unité de masse secondaire (500) montée pour une oscillation linéaire le long de la direction longitudinale (L) et prévue pour une contre-oscillation par rapport à l'induit (100) ; et
au moins un premier et un deuxième ensemble ressort de montage de masse secondaire (312, 313) qui sont chacun disposés perpendiculairement par rapport à la direction longitudinale ;
dans lequel les premier et deuxième ensembles ressort de montage de masse secondaire sont chacun réalisés par au moins un des ressorts à lame plats (50) selon l'une quelconque des revendications 1 à 7, éventuellement dans lequel le premier ou le deuxième ensemble de ressort de montage secondaire est une pile d'au moins deux des ressorts à lame plats selon l'une quelconque des revendications 1 à 7 et les premier et deuxième ensembles ressort de montage de masse secondaire sont en alignement de position l'un avec l'autre dans la direction longitudinale et avec les premier et deuxième ensembles ressort de montage d'induit (310, 311-).

7. Moteur linéaire selon l'une quelconque des revendications 5 à 6, dans lequel l'induit (100) est relié fixement à la section de fixation interne (54) dudit au moins un ressort à lame plat (50) du premier ensemble ressort de montage d'induit (310) et à la section de fixation interne (54) dudit au moins un ressort à lame plat du deuxième ensemble ressort de montage d'induit (311).

8. Moteur linéaire selon l'une quelconque des revendications 5 à 7, dans lequel la section de fixation externe (51) dudit au moins un ressort à lame plat (50) du premier ensemble ressort de montage d'induit (310) et la section de fixation externe dudit au moins un ressort à lame plat du deuxième ensemble ressort de montage d'induit (311) sont reliées fixement par rapport à un stator (200) du moteur linéaire.

9. Dispositif électrique (1), en particulier un dispositif électrique d'hygiène bucco-dentaire, comprenant un élément fonctionnel (4) monté pour un mouvement entraîné et un moteur linéaire (10) selon l'une quelconque des revendications 5 à 8, dans lequel le moteur linéaire est disposé pour entraîner l'élément fonctionnel du dispositif électrique.

10. Dispositif électrique selon la revendication précédente, dans lequel l'élément fonctionnel (4) est monté pour une oscillation rotative entraînée autour d'un axe de rotation qui est incliné par rapport à la direction longitudinale et un engrenage est disposé entre le moteur linéaire et l'élément fonctionnel.

11. Dispositif électrique selon l'une des deux revendications précédentes, dans lequel le moteur linéaire est conçu pour fournir une amplitude maximale d'oscillation dans la plage comprise entre environ ±0,5 mm et environ ±1,5 mm autour d'une position centrale à une force maximale d'entraînement d'au moins environ 5 Newtons, éventuellement une amplitude maximale d'oscillation d'environ ±1,0 mm autour d'une position centrale à une force maximale d'entraînement d'au moins environ 5,5 Newtons.
